(19) Europäisches Patentamt
European Patent Office
Office européen des brevets

(11) Veröffentlichungsnummer : **0 027 871**
**B1**

(12) # EUROPÄISCHE PATENTSCHRIFT

(45) Veröffentlichungstag der Patentschrift : **09.03.83**

(51) Int. Cl.$^3$ : **C 09 K 5/00**, C 23 F 11/16

(21) Anmeldenummer : **80105052.7**

(22) Anmeldetag : **26.08.80**

(54) **Kavitationshemmende, frostsichere Kühl- bzw. Wärmeübertragungsflüssigkeiten sowie Verwendung eines kavitationshemmenden Zusatzes in frostsicheren Kühl- bzw. Wärmeübertragungsflüssigkeiten.**

(30) Priorität : **24.10.79 DE 2942864**

(43) Veröffentlichungstag der Anmeldung : **06.05.81 Patentblatt 81/18**

(45) Bekanntmachung des Hinweises auf die Patenterteilung : **09.03.83 Patentblatt 83/10**

(84) Benannte Vertragsstaaten : **AT BE CH FR GB IT LI NL SE**

(56) Entgegenhaltungen :
**AT B 297 662**
**AT B 332 699**
**DE A 2 658 475**
**US A 4 052 160**

(73) Patentinhaber : **CHEMISCHE WERKE HÜLS AG**
**Postfach 1320**
**D-4370 Marl 1 (DE)**

(72) Erfinder : **Diebel, Klaus, Dr.**
**Am Alten Sportplatz 17 a**
**D-4370 Marl (DE)**

**EP 0 027 871 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Kavitationshemmende, frostsichere Kühl- bzw. Wärmeübertragungsflüssigkeiten sowie Verwendung eines kavitationshemmenden Zusatzes in frostsicheren Kühl- bzw. Wärmeübertragungsflüssigkeiten.

Die metallischen Werkstoffe industrieller Kühl- und Wärmeübertragungssysteme unterliegen beim Einsatz wäßriger, glykolhaltiger Medien mehr oder weniger starken chemischen und mechanischen Beanspruchungen, die zu Werkstoffschäden, d. h. Korrosion und Kavitation führen. Der Grad der Schädigung hängt von der Qualität der Metalle, der Kühl- bzw. Wärmeübertragungsflüssigkeit sowie von den äußeren Bedingungen des Kühlkreislaufs ab. Die Materialschäden können durch Zusatz geeigneter Inhibitoren zu den funktionalen Flüssigkeiten wirksam bekämpft und vermindert, aber nur in den seltensten Fällen vollständig unterbunden werden. Als Korrosionsschutzmittel kommen bevorzugt Benzoate, Borax, Nitrite, gelegentlich auch Phosphate zum Einsatz. Die Wirkung der Inhibitoren ist spezifisch und bleibt in der Regel auf eine Metallgruppe bei Anwendung innerhalb eines begrenzten Konzentrationsbereichs beschränkt. Unter erhöhter Beanspruchung der Metalle, z. B. durch Kavitation, können die Inhibitoren unter Umständen ihre gute Schutzwirkung wieder verlieren und zu verstärkter Schädigung der Werkstoffe führen. Die Schädigung einzelner Metalle, z. B. Aluminium, kann dabei durchaus höhere Werte annehmen, als in Abwesenheit sämtlicher Inhibitoranteile.

Kavitationsschäden sind infolge konstruktiver Gegebenheiten überwiegend an Bauteilen aus Guß und Aluminium, d. h. an Werkstoffen der Pumpen, zu beobachten. Sie treten bevorzugt in Kühlsystemen für Verbrennungsmotoren auf. Gefährdet sind neben der Wasserpumpe die Zylinderlaufbüchsen, Teile des Kurbelgehäuses, Kühler u. a. Guß und Aluminium mit seinen Legierungen sind somit vorrangig gegen Kavitation zu schützen. Die Korrosionsschutzadditive sind dazu nur in Ausnahmefällen geeignet.

Borat-Nitrit-Gemische zeigen in Wasser gegenüber Grauguß einen kavitationshemmenden Effekt. In Glykol-Wasser-Gemischen führt diese Inhibitorkombination jedoch zu erhöhten Abträgen an Aluminium. Auch die Korrosionsinhibierung mit Natriumbenzoat und Natriumnitrit oder Natriumnitrat liefert unzulässig hohe Kavitationsabträge an Aluminium und Aluminiumlegierungen. Beide Formulierungen sind darüber hinaus empfindlich gegenüber einzelnen Chemikalien, wie beispielsweise Natriumcarbonat, die häufig zur Einstellung einer Mindestalkalität der Kühlmedien und zum Schutz gegen Übersäuerung verwendet werden.

Kavitationshemmende Kühlflüssigkeiten für Dieselmotoren sind bereits bekannt aus DE-B 12 39 137 und 12 63 398. Sie enthalten Polyalkylenglykole oder Polyoxethylate von Alkoholen, Carbonsäuren oder Carbonsäureamiden. Auch kavitationshemmende Kühlflüssigkeiten für Verbrennungsmotoren sin aus DE-B 12 39 138 bereits bekannt. Diese enthalten Polyvinylpyrrolidon.

Die Zusätze des Standes der Technik wirken jedoch nur auf Grauguß, und auch dort nur bei Anwendung in vergleichsweise hohen Konzentrationen (0,1 bis 5 Gewichtsprozent). Gegenüber Aluminium sind diese Zusätze praktisch unwirksam, wie im folgenden durch Vergleichsversuche ausgewiesen wird (Tabelle 1 bis 2). Dabei ist aber zu bedenken, daß durch vermehrten Einsatz von Aluminium und Al-Legierungen im Motorenbau die vordringliche Aufgabe besteht, den Kavitations- und Korrosionsschutz diesen Leichtmetallen gegenüber zu verbessern.

Es wurden nun kavitationshemmende Kühl- bzw. Wärmeübertragungsflüssigkeiten gefunden, bestehend aus Lösungen von Glykolen in Wasser, mit einem Gehalt an üblichen Korrosionsinhibitoren, die dadurch gekennzeichnet sind, daß sie 0,005 bis 0,2 Gewichtsprozent, bezogen auf den Glykolanteil der Kühlflüssigkeit, mindestens einer Phosphonocarbonsäure der allgemeinen Formel

$$\begin{array}{ccccl} & & & R & \\ & & & | & \\ H_2O_3P & - & (X)_n & - \; C & - \; COOH \\ & & & | & \\ & & & CH & - \; COOH \\ & & & | & \\ & & & R_1 & \end{array}$$

in der

R = H oder ein Alkyl mit bis zu 6 C-Atomen, wobei der Alkylrest einen oder mehrere Substituenten, z. B. Carboxylgruppen, enthalten kann,

$R_1$ = H oder Alkyl mit bis zu 3 C-Atomen, wobei der Alkylrest gegebenenfalls durch eine oder mehrere Carboxylgruppen substituiert ist, bedeuten kann,

X = ein gegebenenfalls durch COOH- oder $PO_3H_2$-Gruppen substituierter Alkylenrest und

n = 0 oder 1 ist,

enthalten.

Die kavitationshemmenden Kühlflüssigkeiten enthalten vorzugsweise 0,01 bis 0,06 Gewichtsprozent der Phosphonocarbonsäuren.

In einer speziellen Ausführungsform der Erfindung enthalten die kavitationshemmenden Kühlflüssigkeiten als Phosphonocarbonsäure die 2-Phosphonobutantricarbonsäure- (1,2,4).

Die Phosphonocarbonsäuren zeigen bereits in einer für Inhibitoren ungewöhnlich niedrigen Konzentration unterhalb von 0,05 Gewichtsprozent, bezogen auf den Glykolanteil der Flüssigkeiten, optimale Schutzwirkungen.

Wie die nachfolgenden Beispiele zeigen, ermöglichen die erfindungsgemäßen Kühlflüssigkeiten eine Verminderung der Kavitation um 25 bis 70 %.

Beispiele für Phosphonocarbonsäuren, welche die erfindungsgemäßen kavitationshemmenden Kühl- und Wärmeübertragungsflüssigkeiten enthalten können, sind Phosphonobernsteinsäure, 2-Phosphonopropan-dicarbonsäure, 2-Phosphonobutan-dicarbonsäure, 2-Phosphonopentan-dicarbonsäure, 2-Phosphonobutan-tricarbonsäure(1,2,4), 2-Phosphonobutan-tricarbonsäure(2,3,4), 1-Phosphonopropan-dicarbonsäure, 1-Phosphonobutan-tricarbonsäure(1,2,4), 1-Phosphonobutan-tricarbonsäure(1,3,4), 1-Phosphonobutan-tricarbonsäure-(2,3,4), 1-Phosphonopropan-tricarbonsäure, 1,1-Diphosphonopropandicarbonsäure, 2,2-Diphosphonobutan-dicarbonsäure.

Diese Verbindungen können nach allgemein bekannten Verfahren, u. a. gemäß den Verfahrensbeschreibungen in DE-ASS 20 15 068, 20 61 838 und 22 17 692 hergestellt werden.

Als Glykole kommen in den Glykol-Wasser-Mischungen vor allem Ethylenglykol und Propylenglykol zum Einsatz. Es können darüber hinaus auch andere Glykole, wie beispielsweise Diethylen- oder Dipropylenglykol, verwendet werden. Die Glykole können einzeln oder aber als Substanzgemische eingesetzt werden. Man wird sie in den üblichen Konzentrationen von 10 bis 60 Gewichtsprozent, bezogen auf den Glykolanteil der Flüssigkeit, anwenden.

Als Korrosionsschutzmittel kommen die an sich bekannten und gängigen Verbindungen, wie Na-Benzoat, Borax, Na-Nitrit, Na-Phosphate, Na-Carbonat, Na-Nitrat, Na-Silikat sowie organische Stickstoff- oder Schwefelverbindungen in der für diese Substanzen üblichen Kombinationsbreite und in den üblichen Mengen zum Einsatz.

Die Bestimmung der Kavitationsabträge erfolgte gemäß den Richtlinien des standardisierten Prüfverfahrens der Forschungsvereinigung für Verbrennungskraftmaschinen e. V. (Heft R 315, 1977) mit einem Ultraschall-Schwinggerät. Als Testwerkstoff wurde die lösungsgeglühte, kalt ausgehärtete Al-Legierung AlCuMg2 eingesetzt.

Die erfindungsgemäßen Zusätze bewirken in sämtlichen marktgängigen, auf die unterschiedlichsten Schwerpunkte ausgerichteten Produkten deutliche kavitationsmindernde Effekte zwischen 25 und 70 %, d. h. die Phosphonocarbonsäuren verbessern in sehr geringen Konzentrationen die Kavitationsabträge guter Formulierungen und reduzieren die Abtragsmenge gängiger Rezepturen auf die Werte einer guten Formulierung.

(Siehe Tabelle 1, Seite 4)

Tabelle 1

Kavitationsprüfung: Frequenz 20 kHz — Prüfkörper AlCuMg2

Schwingungsamplitude 20 µm — Wasserhärte 10 °dGH

Prüftemperatur 80 °C

| Formulierung | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Phosphonobutan-tricarbonsäure | % | - | 0,01 | 0,05 | - | - | 0,01 | - | 0,01 | - | 0,01 | - | 0,01 | 0,01 | 0,01 |
| Natriumbenzoat | % | - | - | - | - | - | - | - | - | 2,5 | 2,5 | 2,5 | 2,5 | 2,5 | 2,5 |
| Borax | % | 2 | 2 | 2 | 2 | 2 | 2 | 2 | 2 | 2 | 2 | 2 | 2 | 2 | 2 |
| Natriumnitrit | % | - | - | - | 0,3 | 0,3 | 0,3 | 0,3 | 0,3 | 0,2 | 0,2 | - | - | - | - |
| Natriumnitrat | % | - | - | - | - | - | - | - | - | - | - | 0,3 | 0,3 | 0,3 | 0,3 |
| Natriumcarbonat | % | - | - | - | - | - | - | 0,4 | 0,4 | - | - | - | - | - | 0,1 |
| Natriumsilikat | % | - | - | - | - | - | - | - | - | - | - | - | - | - | - |
| Buntmetallschutz | % | - | - | - | - | - | - | - | - | - | - | - | - | 0,15 | 0,15 |
| Polyethylenglykol 1 000 | % | - | - | - | - | 1 | - | - | - | - | - | - | - | - | - |
| Polypropylenglykol 1 000 | % | - | - | - | - | - | - | - | - | - | - | - | - | - | - |
| Testergebnis | | | | | | | | | | | | | | | |
| 20 %ige wäßrige Lösung** | | | | | | | | | | | | | | | |
| Abtragsmenge (mg/h) | | 22 | 13 | 12 | 24 | 26 | 12 | 46 | 16 | 26 | 9,5 | 27 | 12 | 13 | 15 |
| Prüfkörper* | | d | h | h | d | d | h | s | l | s | h | d | h | h | h |
| 10 %ige wäßrige Lösung** | | | | | | | | | | | | | | | |
| Abtragsmenge (mg/h) | | 46 | 17 | 11 | | | | | | 51 | 21 | | | | |
| Prüfkörper* | | s | l | h | | | | | | s | l | | | | |

Tabelle 2

Kavitationsprüfung: Frequenz 20 kHz, Schwingungsamplitude 20 µm, Prüftemperatur 80 °C; Prüfkörper AlCuMg2, Wasserhärte 10 °dGH

| Formulierung | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|
| Phosphonobutan-tricarbonsäure | % | - | 0,01 | - | - | - | 0,01 | - | 0,01 | 0,05 | 0,01 | 0,05 | - | 0,01 | 0,05 |
| Natriumbenzoat | % | 2,5 | 2,5 | 2,5 | 2,5 | 2,5 | 2,5 | 2,5 | 2,5 | 2,5 | 5 | 5 | 2,5 | 2,5 | 2,5 |
| Borax | % | - | - | - | - | - | - | - | - | - | - | - | 2 | 2 | 2 |
| Natriumnitrit | % | 0,3 | 0,3 | 0,3 | 0,3 | - | - | 0,2 | 0,2 | 0,2 | 0,5 | 0,5 | - | - | - |
| Natriumnitrat | % | - | - | - | - | 0,3 | 0,3 | - | - | - | - | - | 0,3 | 0,3 | 0,3 |
| Natriumcarbonat | % | 0,4 | 0,4 | 0,4 | 0,4 | 0,4 | 0,4 | - | - | - | - | - | - | - | - |
| Natriumsilikat | % | - | - | - | - | - | - | - | - | - | - | - | 0,1 | 0,1 | 0,1 |
| Buntmetallschutz | % | - | - | - | - | - | - | - | - | - | - | - | 0,1 | 0,1 | 0,1 |
| Polyethylenglykol 1 000 | % | - | - | 1 | - | 1 | - | - | - | - | - | - | - | - | - |
| Polypropylenglykol 1 000 | % | - | - | - | 1 | - | - | - | - | - | - | - | - | - | - |
| Testergebnis | | | | | | | | | | | | | | | |
| 20 %ige wäßrige Lösung** | | | | | | | | | | | | | | | |
| Abtragsmenge (mg/h) | | 106 | 47 | 166 | 125 | 132 | 44 | 19 | 12 | 11 | 10 | 10,5 | 9,5 | 6,5 | 6 |
| Prüfkörper* | | s | 1 | s | s | s | 1 | d | h | h | h | h | d | h | h |
| 10 %ige wäßrige Lösung** | | | | | | | | | | | | | | | |
| Abtragsmenge (mg/h) | | | | | | | | 12 | 10 | 8 | | | 11 | 7 | 7 |
| Prüfkörper* | | | | | | | | d | h | h | | | d | h | h |

**Tabelle 3**

Kavitationsprüfung: Frequenz 20 kHz
Schwingungsamplitude 20 µm
Prüftemperatur 80 °C

Prüfkörper AlCuMg2
Wasserhärte 10 °dGH

| Formulierung | | 29 | 30 | 31 | 32 |
|---|---|---|---|---|---|
| Phosphonobutan-tricarbonsäure | % | - | 0,01 | - | 0,01 |
| Natriumbenzoat | % | 2,5 | 2,5 | 2,5 | 2,5 |
| Borax | % | 2 | 2 | 1 | 1 |
| Natriumnitrit | % | 0,2 | 0,2 | 0,2 | 0,2 |
| Natriumnitrat | % | 0,2 | 0,2 | 0,2 | 0,2 |
| Natriumcarbonat | % | - | - | - | - |
| Natriumsilikat | % | 0,05 | 0,05 | 0,05 | 0,05 |
| Buntmetallschutz | % | 0,1 | 0,1 | 0,1 | 0,1 |
| Testergebnis | | | | | |
| 20 %ige wäßrige Lösung** | | | | | |
| Abtragsmenge (mg/h) | | 14 | 10,5 | 13,5 | 11 |
| Prüfkörper* | | d | h | d | l |

Zu den Tabellen 1 bis 3:

* Der visuelle Befund der Prüfkörper wurde durch folgende Symbole festgelegt:
h = hell, farblich unverändert
l = leichte Anlaufflecken
d = dunkel angelaufen
s = schwarz

** von inhibiertem Ethylenglykol

Die Kühl- bzw. Wärmeübertragungsflüssigkeiten der Erfindung zeigen außer dem stark kavitationshemmenden Effekt auch einen Schutz gegen Feststoffbildung an den wärmeübertragenden Wandungen und darüber hinaus auch einen verstärkten Korrosionsschutz für die in Kühlsystemen zur Anwendung kommenden metallischen Werkstoffe. Beide Wirkungen sind den folgenden Tabellen zu entnehmen.

Tabelle 4

Feststoffbildung an den Heizstäben bei Einsatz unter schiedlicher Gefrierschutzglykole.

| Rezeptur | Gefrierschutzglykol | Phosphonobutantricarbonsäure (Massen-%) | Wasserhärte (°dGH) | Befund der Heizstäbe |
|---|---|---|---|---|
| 1 | I | - | 10 | dicker, festhaftender grauer Belag |
| 2 | I | 0,005 | 20 | hellgrauer, dünner Belag |
| 3 | I | 0,01 | 10 | dünner, zusammenhängender Belag |
| 4 | II | - | 10 | dicker, grauer Belag |
| 5 | II | 0,005 | 10 | schwache Belagsbildung |
| 6 | III | - | 10 | dicker, festhaftender Belag |
| 7 | III | 0,005 | 10 | geringe Belagsbildung |
| 8 | III | 0,01 | 10 | unbedeutende Belagsbildung |
| 9 | IV | - | 10 | dicker, fester Belag |
| 10 | IV | 0,01 | 10 | an vereinzelten Stellen geringe Belagsbildung |

Rezepturen der Gefrierschutzglykole :

I 2,5 % Natriumbenzoat
1,4 % Borax
0,2 % Natriumnitrit
0,1 % Natriumnitrat
0,1 % Buntmetallschutz

II 2,5 % Natriumbenzoat
1,4 % Borax
0,2 % Natriumnitrit
0,2 % Natriumnitrat
0,05 % Natriumsilikat
0,1 % Buntmetallschutz

III 2,5 % Natriumbenzoat
1,4 % Borax
0,3 % Natriumnitrit
0,05 % Natriumsilikat
0,1 % Buntmetallschutz

IV 2,5 % Natriumbenzoat
2 % Borax
0,4 % Natriumnitrat

0,1 % Natriumcarbonat
0,1 % Natriumsilikat
0,1 % Buntmetallschutz

Tabelle 5

Korrosionstest gemäß FVV Heft 315, 1977, mit Gefrierschutzglykolen I bis IV, Angabe der Abtragsmengen in mg/Platte.

| | Rezepturen | | | | | | | | | |
|---|---|---|---|---|---|---|---|---|---|---|
| Metalle | 1 | 2 | 3 | 4 | 5 | 6 | 7 | 8 | 9 | 10 |
| Kupfer | 4,1 | 2,3 | 0,5 | 1,1 | 1,5 | 3,3 | 1,5 | 1,8 | 1,0 | 1,0 |
| Messing | 3,9 | 3,2 | 2,7 | 2,5 | 2,1 | 3,5 | 2,9 | 2,0 | 4,3 | 1,9 |
| Lot (auf Messing) | 5,2 | 5,0 | 0,1 | 1,9 | 1,7 | 4,5 | 2,0 | 1,7 | 1,3 | 1,0 |
| Stahl | 6,7 | 0,0 | 1,3 | 0,4 | 0,8 | 1,0 | 1,5 | 0,0 | 1,4 | 0,8 |
| Grauguß | 5,5 | 1,0 | 3,6 | 2,5 | 2,0 | 2,1 | 2,5 | 1,5 | 9,8 | 5,2 |
| AlCuMg2 | 180 | 145 | 13 | 15 | 7,0 | 33 | 14 | 12 | 1,5 | 0,4 |
| G-AlSi 10 Mg-wa | 194 | 146 | 14 | 18 | 14 | 26 | 15 | 8,5 | 2,0 | 0,9 |

Die Oberflächen sämtlicher Bleche waren bei den Proben 3, 5, 7, 8, 9 und 10 nach der Reinigung blank und glatt und zeigten keinerlei Korrosionsstellen (kein Lochfraß), lediglich beim Grauguß war in gewissem Umfang Spaltkorrosion, d. h. Angriff an den Verbindungsstellen zu den Zwischenringen aus Stahl zu beobachten.

**Ansprüche**

1. Kavitationshemmende, frostsichere Kühl- bzw. Wärmeübertragungsflüssigkeiten, bestehend aus Lösungen von Glykolen in Wasser, mit einem Gehalt an üblichen Korrosionsinhibitoren, dadurch gekennzeichnet, daß sie 0,005 bis 0,2 Gewichtsprozent, bezogen auf den Glykolanteil der Kühlflüssigkeiten, mindestens einer Phosphonocarbonsäure der allgemeinen Formel

$$\begin{array}{l} \qquad\qquad\qquad\quad R \\ \qquad\qquad\qquad\quad | \\ H_2O_3P - (X)_n - C - COOH \\ \qquad\qquad\qquad\quad | \\ \qquad\qquad\qquad\quad CH - COOH \\ \qquad\qquad\qquad\quad | \\ \qquad\qquad\qquad\quad R_1 \end{array}$$

in der

R = H oder ein Alkyl mit bis zu 6 C-Atomen, wobei der Alkylrest einen oder mehrere Substituenten, z. B. Carboxylgruppen, enthalten kann,

$R_1$ = H oder Alkyl mit bis zu 3 C-Atomen, wobei der Alkylrest gegebenenfalls durch eine oder mehrere Carboxylgruppen substituiert ist, bedeuten kann,

X = ein gegebenenfalls durch COOH- oder $PO_3H_2$-Gruppen substituierter Alkylenrest und

n = 0 oder 1 ist,

enthalten.

2. Kavitationshemmende, frostsichere Kühl- bzw. Wärmeübertragungsflüssigkeiten nach Anspruch 1, dadurch gekennzeichnet, daß sie 0,01 bis 0,06 Gewichtsprozent der Phosphonocarbonsäure enthalten.

3. Kavitationshemmende, frostsichere Kühl- bzw. Wärmeübertragungsflüssigkeiten nach den Ansprüchen 1 und 2, dadurch gekennzeichnet, daß sie als Phosphonocarbonsäure die 2-Phosphonobutantricarbonsäure (1,2,4) enthalten.

4. Verwendung einer Phosphonocarbonsäure der allgemeinen Formel

$$\begin{array}{l} \qquad\qquad\qquad\quad R \\ \qquad\qquad\qquad\quad | \\ H_2O_3P - (X)_n - C - COOH \\ \qquad\qquad\qquad\quad | \\ \qquad\qquad\qquad\quad CH - COOH \\ \qquad\qquad\qquad\quad | \\ \qquad\qquad\qquad\quad R_1 \end{array}$$

in der

R = H oder ein Alkyl mit bis zu 6 C-Atomen, wobei der Alkylrest einen oder mehrere Substituenten, z. B. Carboxylgruppen, enthalten kann,

$R_1$ = H oder Alkyl mit bis zu 3 C-Atomen, wobei der Alkylrest gegebenenfalls durch eine oder mehrere Carboxylgruppen substituiert ist, bedeuten kann,

X = ein gegebenenfalls durch COOH- oder $PO_3H_2$-Gruppen substituierter Alkylenrest und

n = 0 oder 1 ist,

als kavitationshemmender Zusatz in frostsicheren Kühl- bzw. Wärmeübertragungsflüssigkeiten, bestehend aus Lösungen von Glykolen in Wasser mit einem Gehalt an üblichen Korrosionsinhibitoren.

## Claims

1. A cavitation-resistant, non-freezing liquid for the transfer of cold or heat, comprising an aqueous solution of a glycol containing a conventional corrosion inhibitor, characterised in that it contains 0.005 to 0.2 % by weight, based on the glycol content of the liquid, of at least one phosphono-carboxylic acid of the general formula

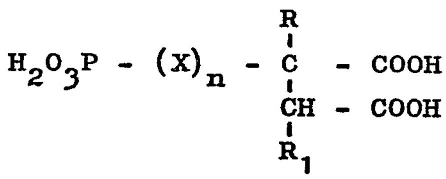

where

R = H or alkyl of up to 6 carbon atoms optionally containing one or more substituents, e.g. carboxyl,

$R^1$ = H or alkyl of up to 3 carbon atoms optionally substituted by one or more carboxyl groups,

X = alkylene optionally substituted by —COOH or —$PO_3H_2$, and

n = 0 or 1.

2. A cavitation-resistant, non-freezing liquid for the transfer of cold or heat according to claim 1, characterised in that it contains 0.01 to 0.06 % by weight of the phosphono-carboxylic acid.

3. A cavitation-resistant, non-freezing liquid for the transfer of cold or heat according to claim 1 or 2, characterised in that it contains as phosphono-carboxylic acid 2-phosphonobutane-1,2,4-tricarboxylic acid.

4. The use of a phosphono-carboxylic acid of the general formula

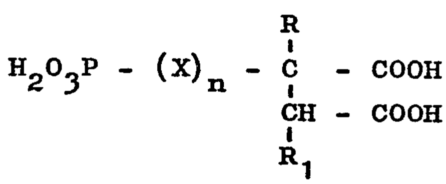

where

R = H or alkyl of up to 6 carbon atoms optionally containing one or more substituents, e.g. carboxyl,

$R^1$ = H or alkyl of up to 3 carbon atoms optionally substituted by one or more carboxyl groups,

X = alkylene optionally substituted by —COOH or $PO_3H_2$, and

n = 0 or 1,

as a cavitation-resistant additive to a non-freezing liquid for the transfer of cold or heat, comprising an aqueous solution of a glycol containing a conventional corrosion inhibitor.

## Revendications

1. Liquides antigel de transmission de frigories ou de calories, empêchant la cavitation, constitués par des solutions de glycols dans de l'eau et renfermant des agents anti-corrosion usuels, caractérisés par le fait qu'ils renferment de 0,005 à 0,2 % en poids, relativement à la fraction de glycol des liquides de refroidissement, d'au moins un acide phosphono-carboxylique de la formule générale

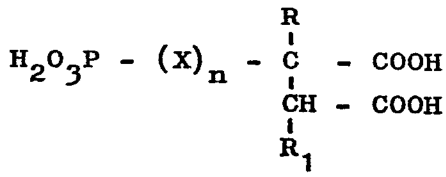

dans laquelle

R représente de l'hydrogène ou un alkyle comportant jusqu'à 6 atomes de carbone, le reste alkyle pouvant renfermer un ou plusieurs substituants, par exemple des groupes carboxyle,

$R_1$ peut représenter de l'hydrogène ou un alkyle comportant jusqu'à 3 atomes de carbone, le reste alkyle étant éventuellement substitué par un ou plusieurs groupes carboxyle,

X représente un reste alkylène éventuellement substitué par des groupes COOH ou $PO_3H_2$, et

n est égal à zéro ou à un.

2. Liquides antigel de transmission de frigories ou de calories, empêchant la cavitation, selon la revendication 1, caractérisés par le fait qu'ils renferment de 0,01 à 0,06 % en poids de l'acide phosphono-carboxylique.

3. Liquides antigel de transmission de frigories ou de calories, empêchant la cavitation, selon les revendications 1 et 2, caractérisés par la fait qu'ils renferment, comme acide phosphono-carboxylique, l'acide 2-phosphonobutane-tricarboxylique (1,2,4).

4. L'utilisation, comme additif empêchant la cavitation, dans des liquides antigel de transmission de frigories ou de calories constitués par des solutions de glycols dans de l'eau et renfermant des agents anti-corrosion usuels, d'un acide phosphono-carboxylique de la formule générale

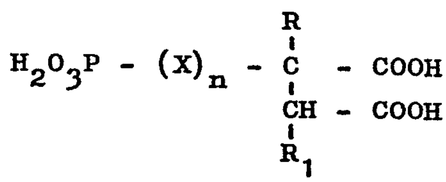

dans laquelle

R représente de l'hydrogène ou un alkyle comportant jusqu'à 6 atomes de carbone, le reste alkyle pouvant renfermer un ou plusieurs substituants, par exemple des groupes carboxyle,

$R_1$ peut représenter de l'hydrogène ou un alkyle comportant jusqu'à 3 atomes de carbone, le reste alkyle étant éventuellement substitué par un ou plusieurs groupes carboxyle,

X représente un reste alkylène éventuellement substitué par des groupes COOH ou $PO_3H_2$, et

n est égal à zéro ou à un.